# EUROPÄISCHE PATENTANMELDUNG

(11) **EP 1 270 121 A2**
(43) Veröffentlichungstag der Anmeldung: **02.01.2003**
(21) Anmeldenummer: 02010980.7
(22) Anmeldetag: 17.05.2002
(51) Int. Cl.: B23C 5/04

(54) **Wälzfräser**

(30) Priorität: 28.06.2001 DE 10131333
(71) Anmelder: Fette GmbH, 21493 Schwarzenbek (DE)
(72) Erfinder: Soltau, Wolfgang, 29490 Neu Dachau (DE); Oppelt, Klaus, 21481 Lauenburg (DE); Carmincke, Wolfgang, 21379 Scharnebeck (DE)
(74) Vertreter: Patentanwälte Hauck, Graalfs, Wehnert, Döring, Siemons, Schildberg

(57) **Zusammenfassung**

Wälzfräser mit
- einem Grundkörper aus Stahl, der im Querschnitt als vielseitiges Vieleck geformt ist und
- Segmenten aus Hartmetall von der Länge einer Seite des Vielecks, die eine oder mehrere Schneiden aufweisen, wobei die Segmente am Grundkörper befestigt sind und zusammen eine Werkzeugeinheit bilden.

## Beschreibung

Die Erfindung bezieht sich auf einen Wälzfräser nach dem Patentanspruch 1.

Wälzfräser werden vor allen Dingen verwendet für die Herstellung von Verzahnungsteilen, wie Zahnräder, Schneckenräder, Zahnstangen oder dergleichen. Im Allgemeinen unterscheidet man zwischen einer Bohrungs- und einer Schaftausrührung. Bei der Bohrungsausführung ist die Bohrung mit einer Längsnut zur formschlüssigen Drehmomentübertragung versehen. Alternativ kann die Bohrung mit einer ein- bzw. zweiseitigen Quernut zur formschlüssigen Drehmomentübertragung zusammenwirken. Es ist jedoch auch eine Bohrungsausführung mit stirnseitiger friktionaler Drehmomentübertragung bekannt. Bei der Schaftausführung sind beidseitige Schäfte zur kraftschlüssigen Drehmomentübertragung einteilig mit dem Werkzeugkörper geformt. Die Schäfte können beidseitig kegelig sein oder einseitig kegelig und anderseitig zylindrisch. Die kegeligen Schäfte können hohl sein und auch als Steilkegel ausgeführt werden.

Als Material für derartige Wälzfräser dient in erster Linie Schnellstahl. Es ist jedoch auch bekannt, Wälzfräserkörper aus Hartmetall zu fertigen. Unter Hartmetall werden pulvermetallurgisch hergestellte Werkstoffe zusammengefasst, die im Wesentlichen aus den Hartstoffen Wolfram-Karbid, Titan-Karbid und Tantal-Karbid sowie aus dem Bindemetall Kobalt bestehen. Hartmetalle weisen eine gesteigerte Verschleißfestigkeit gegenüber Stahl auf, können daher für Einsätze mit höherer Schnittgeschwindigkeit verwendet werden, und zwar auch für die Trockenbearbeitung. Die Einsatztemperaturgrenze bei Hartmetall liegt viel höher als bei Stahl, beispielsweise bei etwa 1000C°.

Hartmetall hat jedoch von Haus aus eine relativ hohe Sprödigkeit. Durch Schläge und Stöße kann es daher rasch zu einer Beschädigung des Werkzeugs kommen, dessen Herstellung außerordentlich aufwändig ist.

Es ist auch bekannt, einen hohlen Werkzeugkörper aus Hartmetall auf einem Schaft aus Stahl zu befestigen. Die Befestigung erfolgt vor allen Dingen durch Löten. Diese Ausführungsform hat den Vorteil, dass nur der eigentliche Werkzeugabschnitt aus dem günstigen Material Hartmetall besteht, während der Schaft aus wenig aufwändigem Material geformt ist. Es ist ferner bekannt, den Werkzeugkörper eines Wälzfräsers im sogenannten PVD-Verfahren mit einer Hartschicht zu versehen (z.B. Titannitrit). Die Beschichtung wird aufgebracht, nachdem der Werkzeugkörper auf dem Stahlschaft fertig bearbeitet worden ist. Dies ist aus Genauigkeitsgründen erforderlich. Die Beschichtung wird bei relativ hohen Temperaturen durchgeführt, z.B. bei 500°C. Da Stahl einen deutlich höheren Ausdehnungskoeffizienten als Hartmetall aufweist, besteht die Gefahr, dass der Werkzeugkörper durch Temperaturdehnung des Stahlschaftes zerstört wird.

Der Erfindung liegt die Aufgabe zugrunde, einen Wälzfräser zu schaffen, dessen Kern aus Stahl und dessen Werkzeugkörper aus Hartmetall besteht und der höheren Temperaturen unterworfen werden kann, ohne dass die Temperaturdehnung des Stahlkerns den Werkzeugkörper beeinträchtigt.

Diese Aufgabe wird durch die Merkmale der Ansprüche 1 gelöst.

Bei der erfindungsgemäßen Konstruktion eines Wälzfräsers ist der Grundkörper aus Stahl im Querschnitt als gleichseitiges Vieleck geformt, etwa als Sechs- oder Achteck. Segmente aus Hartmetall von der Länge einer Seite des Vielecks, die eine oder mehrere Schneiden aufweisen, sind so am Grundkörper befestigt, dass sie zusammen eine Werkzeugeinheit bilden. Die Segmente können gelötet und/oder formschlüssig mit dem Grundkörper verbunden sein, wobei zu diesem Zweck nach einer Ausgestaltung der Erfindung in die Seiten des Grundkörpers jeweils eine achsparallele Nut geformt ist, in die ein leistenförmiger Vorsprung der Segmente eingreift.

Das Verfahren zur Herstellung des erfindungsgemäßen Wälzfräsers sieht vor, dass Segmente aus Hartmetall mit unvollständiger oder vorprofilierter Kontur an einem Grundkörper aus Stahl befestigt werden, der im Querschnitt als gleichseitiges Vieleck geformt ist. Anschließend wird die Werkzeugeinheit endbearbeitet. Die Segmente können unprofiliert aus Sintermetall geformt werden, bevor sie am Grundkörper befestigt werden. Alternativ können sie auch durch Sinterformung vorprofiliert werden und anschließend am Grundkörper befestigt werden. Auf dem Grundkörper erfolgt dann nur noch ein Fertigschleifen des Profils.

Die Erfindung wird nachfolgend anhand von Zeichnungen näher erläutert.
Fig. 1 zeigt einen Schnitt durch einen Wälzfräser nach der Erfindung.
Fig. 2 zeigt die Seitenansicht des Grundkörpers des Wälzfräsers nach Fig. 1.
Fig. 3 zeigt ein Segment des Wälzfräsers nach Fig. 1 mit einem angedeuteten Vorprofil.

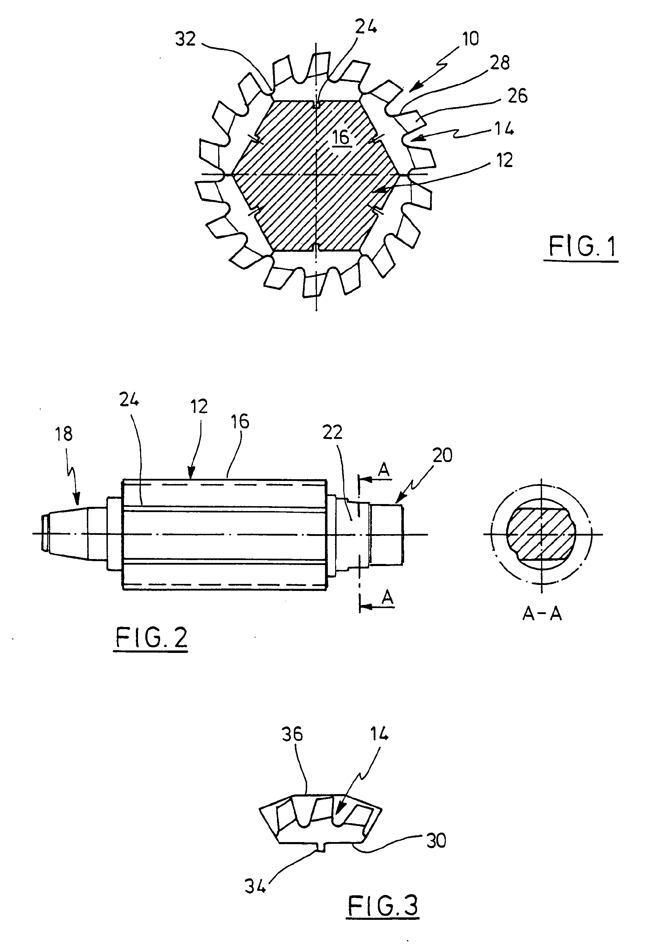

In Fig. 1 ist ein Wälzfräser 10 im Querschnitt gezeigt. Er setzt sich zusammen aus einem Grundkörper 12 und einzelnen Schneidensegmenten 14. Der Grundkörper 12 ist in Fig. 2 in Seitenansicht und im Schnitt A-A dargestellt. Ein mittlerer Abschnitt 16 des Grundkörpers 12 ist im Querschnitt ein gleichseitiges Sechseck. An einem Ende des Abschnitts 16 ist ein Einspannkonus angeformt und am anderen Ende ein zylindrischer Zapfen 20, der einen Abschnitt 22 aufweist, der mit gegenüberliegenden Abflachungen versehen ist, wie im Schnitt A-A dargestellt. Die Ausbildung der Zapfen 18, 20 ist konventionell.

Der aus Stahl gefertigte Grundkörper 12 weist in dem mittleren Abschnitt an den Seiten achsparallele Nuten 24 auf, die im Schnitt rechteckförmig sind.

Die Schneidensegmente 14, von denen sechs mit dem Grundkörper 12 verbunden sind, sind aus einem geeigneten Hartmetall geformt. Jedes Segment weist drei Fräszähne 26 auf, zwischen denen Nuten 28 angeordnet sind. Die Ausbildung der Zähne 26 und der Nuten 28 ist herkömmlich. Auf der dem Grundkörper 12 zugekehrten Seite sind die Segmente 14 mit einer Fläche 30 versehen, deren Länge jeweils einer Seite einer Fläche des Grundkörpers 12 entspricht. Die Länge der Segmente entspricht z.B. der Länge des Grundkörperabschnitts 16. Die Länge kann jedoch auch kürzer sein, so dass z.B. zwei oder mehr Segmente 14 in achsparalleler Richtung hintereinander angeordnet sind. Zwischen den Segmenten 14 sind Dehnungsfugen 32 vorgesehen, und auch bei in Achsrichtung nebeneinander angeordneten Segmenten 14 ist zwischen diesen eine Dehnungsfuge vorzusehen, um der unterschiedlichen Ausdehnung des Materials des Grundkörpers 12 einerseits und der Segmente 14 andererseits zu kompensieren.

Mittig steht aus der Fläche 30 der Schneidensegmente 14 ein leistenförmiger Vorsprung 34 vor, der passend in eine Nut 24 des Grundkörpers 12 einsetzbar ist.

Bei der Herstellung der Segmente 14 werden zunächst Vorformlingssegmente aus Hartmetall hergestellt, beispielsweise im Sinterverfahren, wie durch die dick durchgezogene Linie 36 in Fig. 3 angedeutet. Diese Segmente werden am Grundkörper 12 angebracht und z.B. festgelötet. Anschließend erfolgt die Ausformung der Fräszähne 26, wie in Fig. 1 zu erkennen.

Es ist auch denkbar, im Sinterverfahren die Segmente 14 vorzuprofilieren und anschließend nach Anbringung der Segmente am Grundkörper 12 eine Endbearbeitung vorzunehmen, beispielsweise durch Schleifen.

## Patentansprüche

1. Wälzfräser mit
- einem Grundkörper (12) aus Stahl, der im Querschnitt als vielseitiges Vieleck geformt ist und
- Segmenten (14) aus Hartmetall von der Länge einer Seite des Vielecks, die eine oder mehrere Schneiden aufweisen, wobei die Segmente (14) am Grundkörper (12) befestigt sind und zusammen eine Werkzeugeinheit bilden.

2. Wälzfräser nach Anspruch 1, **dadurch gekennzeichnet, dass** zwischen den Segmenten (14) und dem Grundkörper (12) Formschluss besteht.

3. Wälzfräser nach Anspruch 2, **dadurch gekennzeichnet, dass** in die Seiten des Grundkörpers (12) jeweils eine achsparallele Nut (24) geformt ist, in die ein leistenförmiger Vorsprung (34) der Segmente (14) eingreift.

4. Wälzfräser nach einem der Ansprüche 1 bis 3, **dadurch gekennzeichnet, dass** der Grundkörper (12) sechseckig ist und entsprechend sechs Segmente (14) vorgesehen sind, wobei jedes Segment (14) drei Fräszähne (26) in Umfangsrichtung versetzt hintereinander aufweist.

5. Verfahren zur Herstellung eines Wälzfräsers, insbesondere nach einem der Ansprüche 1 bis 4, **dadurch gekennzeichnet, dass** aus Hartmetall Segmente mit unvollständiger oder vorprofilierter Kontur an einem Grundkörper aus Stahl befestigt werden, der im Querschnitt als gleichseitiges Vieleck geformt ist und anschließend die so gebildete Werkzeugeinheit endbearbeitet wird.

6. Verfahren nach Anspruch 5, **dadurch gekennzeichnet, dass** die Segmente (36) unprofiliert aus Sintermaterial geformt werden.

7. Verfahren nach Anspruch 5, **dadurch gekennzeichnet, dass** die Segmente vorprofiliert und anschließend nach Befestigung auf dem Grundkörper fertig bearbeitet werden.
